(19) **Europäisches Patentamt / European Patent Office / Office européen des brevets**

(11) **EP 4 517 097 A1**

(12) **EUROPEAN PATENT APPLICATION**

(43) Date of publication:
**05.03.2025 Bulletin 2025/10**

(21) Application number: **24196636.5**

(22) Date of filing: **27.08.2024**

(51) International Patent Classification (IPC):
**F04D 19/00** $^{(2006.01)}$    **F04D 27/00** $^{(2006.01)}$
**F04D 29/58** $^{(2006.01)}$    **F04D 29/70** $^{(2006.01)}$

(52) Cooperative Patent Classification (CPC):
**F04D 29/703; F01P 5/043; F04D 19/005; F04D 27/001; F04D 27/004; F04D 29/582; F24F 11/39**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.08.2023  JP 2023138274**
**08.07.2024  JP 2024109731**

(71) Applicant: **Kubota Corporation**
**Osaka-shi, Osaka 556-8601 (JP)**

(72) Inventors:
• **YAMADA, Shunya**
**SAKAI-SHI, OSAKA, 5900908 (JP)**
• **ONO, Kohei**
**SAKAI-SHI, OSAKA, 5900908 (JP)**

(74) Representative: **Cabinet Beau de Loménie**
**158, rue de l'Université**
**75340 Paris Cedex 07 (FR)**

(54) **FAN CONTROL SYSTEM AND WORK MACHINE**

(57)    A fan control system includes: a fan (32); a dust barrier (31) near the fan (32); a fan actuator (33) configured to rotate the fan (32) in a normal direction and a reverse direction; a fan controller (51) configured to control a manner in which the fan actuator (33) is driven; a clogging degree calculator (53) configured to calculate a clogging degree of the dust barrier (31) based on drive behavior of the fan (32); and a reverse rotation instructor (54) configured to instruct the fan controller (51) based on the clogging degree to rotate the fan (32) in the reverse direction.

Fig.4

EP 4 517 097 A1

## Description

Technical Field

The present invention relates to a fan control system and a work machine provided with a fan control system.

Background Art

Work machines include a cooling fan configured to rotate to introduce outside air for cooling heat generating components such as a radiator and an engine, and also include a dust barrier configured to prevent grass and dust from entering, together with the outside air (that is, cooling air), a space containing the heat generating components. Continuing to use the dust barrier for dust prevention, however, lets dust accumulate on the dust barrier in an increasing amount. This decreases the amount of cooling air to be introduced, and thereby decreases the effect of cooling the heat generating components with use of cooling air. To address this issue, Patent Literature 1, for example, discloses a conventional harvester configured to switch the rotation direction of a cooling fan from the normal direction to the reverse direction with each elapse of a reaping work time period set on the basis of a prediction of the amount of generation of dust. This allows the cooling fan to blow air toward a dust barrier in the opposite direction to blow dust off the dust barrier for removal, and thereby allows cooling air to be introduced into a heat generating component containing space in a recovered amount.

Citation List

Patent Literature

Patent Literature 1

Japanese Patent Application Publication, Tokukaihei, No. 11-36862

Summary of Invention

Technical Problem

The fan control system disclosed in Patent Literature 1 is configured to reverse the rotation direction of the cooling fan at predetermined intervals regardless of whether the dust barrier has been clogged with grass, and does not necessarily drive the cooling fan efficiently. Unnecessarily reversing the rotation direction of the cooling fan will, for instance, waste energy in switching the rotation direction of the cooling fan and decrease the durability of the mechanism for switching the rotation direction.

In view of the above circumstances, the present invention has an object of providing a fan control system configured to appropriately control how a fan is driven and a work machine provided with such a fan control system.

Solution to Problem

A fan control system according to the present invention includes: a fan; a dust barrier near the fan; a fan actuator configured to rotate the fan in a normal direction and a reverse direction; a fan controller configured to control a manner in which the fan actuator is driven; a clogging degree calculator configured to calculate a clogging degree of the dust barrier based on drive behavior of the fan; and a reverse rotation instructor configured to instruct the fan controller to rotate the fan in the reverse direction based on the clogging degree.

The term "clogging degree" as used herein refers to the degree of clogging of, for example, air flow holes in a dust barrier. The clogging degree of 0%, for example, indicates that the dust barrier is brand-new and its air flow holes are not clogged at all. The clogging degree of 100% indicates that the dust barrier has fully clogged air flow holes. The clogging degree is not necessarily expressed in percentages. The clogging degree for the present invention is based on drive behavior of the fan, and is calculable, for instance, with use of an experimentally or empirically determined function involving the drive behavior as a variable. The following formula holds true:

$$K = G(\alpha 1,\ \alpha 2,\ \alpha 3,...)$$

where K denotes the clogging degree; G denotes a function for deriving the clogging degree; and $\alpha 1$, $\alpha 2$, $\alpha 3$,... denote respective instances of the drive behavior. Examples of the fan behavior parameter ($\alpha 1$, $\alpha 2$, $\alpha 3$,...) include a fan drive time, a fan rotation speed, the difference between an intended number of fan revolutions and the actual number of fan revolutions, and the range of change in the number of fan revolutions. The function is advantageously in the form of a lookup table. The clogging degree may alternatively be determined with use of a decision tree algorithm.

The fan control system calculates the clogging degree of the dust barrier on the basis of the drive behavior of the fan. The fan control system, for instance, determines that the clogging degree is high if rotating the fan for a long time is not effective at an accordingly sufficient level. If the fan control system determines that the clogging degree is high, the reverse rotation instructor transmits a reverse rotation instruction to the fan controller to rotate the fan in the reverse direction for unclogging the dust barrier. The fan control system rotates the fan in the reverse direction in response to determining that the clogging degree is high as above. This configuration prevents the fan from unnecessarily rotating in the reverse direction, and allows the fan control system to appropriately control how the fan is driven.

The fan control system should include an electric motor rather than a mechanical power transmission mechanism to easily transmit motive power to the fan for its normal and reverse rotations and switch the rotation direction between the normal and reverse directions. The fan control system may thus be further configured such that the fan actuator is a fan motor configured to receive from the fan controller a drive signal for controlling the manner in which the fan motor is driven.

The clogging degree of the dust barrier tends to be high if the fan has been driven at a high level for a long time and low if the fan has been driven at a low level for a short time. The fan control system may thus be further configured such that the drive behavior is based on either or both of a rotation speed of the fan and a drive time of the fan.

This configuration allows the fan control system to appropriately calculate the clogging degree with use of an easily obtainable detection parameter.

Rotating the fan in the reverse direction for an excessively short time may not unclog the dust barrier sufficiently. Rotating the fan in the reverse direction for an excessively long time may, on the other hand, lead to a disadvantage due to the lack of the effect of the fan. The fan control system should thus suitably rotate the fan in the reverse direction over, for example, a time period with an experimentally or empirically predetermined value (or one selected from among two or more such values) or a time period determined with use of the calculated clogging degree as a parameter. The fan control system may thus be further configured in a mode such that the fan rotates in the reverse direction over a predetermined time period. The fan control system may be further configured in another mode such that the fan rotates in the reverse direction over a time period variable according to the clogging degree. The fan control system may also be configured to select either of the two modes.

The fan control system may be further configured as a preferred embodiment such that the fan is a cooling fan configured to cool at least one heat generating component with use of at least one cooling medium, the fan control system further includes an internal temperature detector configured to detect a temperature of the at least one cooling medium or a temperature of the at least one heat generating component, and the clogging degree calculator calculates the clogging degree based on the temperature detected by the internal temperature detector and the drive behavior. This embodiment of the present invention is a fan control system configured to control a cooling fan of a cooling system for cooling a heat generating component. The fan control system calculates the clogging degree of the dust barrier on the basis of the temperature of a cooling medium or heat generating component detected by the internal temperature detector and the drive behavior of the cooling fan. Similarly to the above, the following formula holds true for this embodiment:

$$K = G(\alpha1, \alpha2, \alpha3,...,\beta1, \beta2, \beta3,...)$$

where K denotes the clogging degree; G denotes a function for deriving the clogging degree; $\alpha1, \alpha2, \alpha3,...$ denote respective instances of the drive behavior of the cooling fan; and $\beta1, \beta2, \beta3,...$ denote respective instances of the temperature parameter of the heat generating component. Examples of the temperature parameter ($\beta1, \beta2, \beta3,...$) include the temperature of a cooling medium or heat generating component that the internal temperature detector has detected, the outside air temperature that the external temperature detector has detected, and the rate of increase in the temperature (that is, a temperature change over a predetermined time period) of a heat generating component (that is, a cooling target component) such as the motor and the inverter. The use of the temperature increase rate is particularly effective as the rate increases in response to the dust barrier becoming clogged. The fan control system, for instance, determines that the clogging degree is high if rotating the fan for a long time fails to cause the detected temperature of the cooling medium or heat generating component to be lower than a predetermined value. If the fan control system determines that the clogging degree is high, the reverse rotation instructor transmits a reverse rotation instruction to the fan controller to rotate the cooling fan in the reverse direction to unclog the dust barrier. The fan control system rotates the cooling fan in response to determining that the clogging degree is high as above. This configuration prevents the cooling fan from unnecessarily rotating in the reverse direction, and allows the cooling fan to be driven appropriately.

The fan control system may further include an external temperature detector configured to detect a temperature of outside air (that is, ambient or environmental temperature), wherein the clogging degree calculator calculates the clogging degree based on the temperature of the outside air, the temperature detected by the internal temperature detector, and the drive behavior. The fan control system calculates the clogging degree of the dust barrier on the basis of not only the temperature of a cooling medium or heat generating component detected by the internal temperature detector and the drive behavior of the cooling fan, but also the outside air temperature. This inhibits the detected temperature from deviating from the temperature of the heat generating component due to whether the outside air temperature is high or low (for example, summer or winter, or day or night). This in turn improves the accuracy of calculating the clogging degree, and allows the fan control system to more appropriately control how the cooling fan is driven.

The cooling system described above is suitably provided for a harvester as it stirs up leaves, stalks, and the like when in operation or for a work machine such as a mower as it stirs up cut grass. The cooling system for such a work machine uses cooling air, cooling water, cooling liquid, a heat pipe, or the like as a cooling medium. The cooling fan may be configured to blow cooling air toward a heat generating component or toward a cooling medium that exchanges heat with the heat generating component.

Work machines include an engine, an electric motor, a hybrid engine, or the like as a power source. An engine-based work machine includes an engine and a radiator as its main heat generating components. An electric motor-based work machine includes an electric motor, an inverter, and a battery as its main heat generating components. The fan control system may thus be further configured as a preferred embodiment such that the at least one heat generating component is at least one of a radiator, an engine, an electric motor, an inverter, or a battery.

The cooling system described above is particularly suitably usable for a work machine as it allows the work machine to have the above features. A work machine according to the present invention thus includes: a cooling fan configured to cool a heat generating component with use of a cooling medium; a dust barrier near the cooling fan; a fan actuator configured to rotate the cooling fan in a normal direction and a reverse direction; a fan controller configured to control a manner in which the fan actuator is driven; an internal temperature detector configured to detect a temperature of the cooling medium or a temperature of the heat generating component; a clogging degree calculator configured to calculate a clogging degree of the dust barrier based on the temperature detected by the internal temperature detector and drive behavior of the cooling fan; and a reverse rotation instructor configured to instruct the fan controller based on the clogging degree to rotate the cooling fan in the reverse direction.

Brief Description of Drawings

Fig. 1 is a left side view of a tractor.
Fig. 2 is a front view of a tractor.
Fig. 3 is a cross-sectional left side view of a motive power system, illustrating the arrangement of its constituent elements.
Fig. 4 is a functional block diagram illustrating the control system of a cooling system.
Fig. 5 is a flowchart of an example of how to control a cooling fan.
Fig. 6 is a flowchart of another example of how to control a cooling fan.

Description of Embodiments

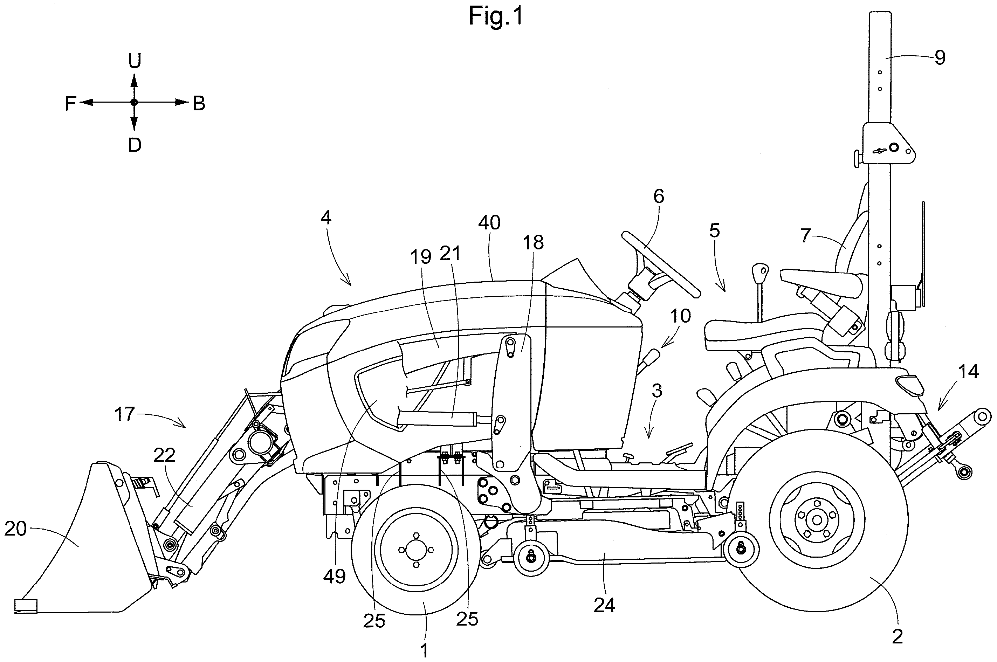

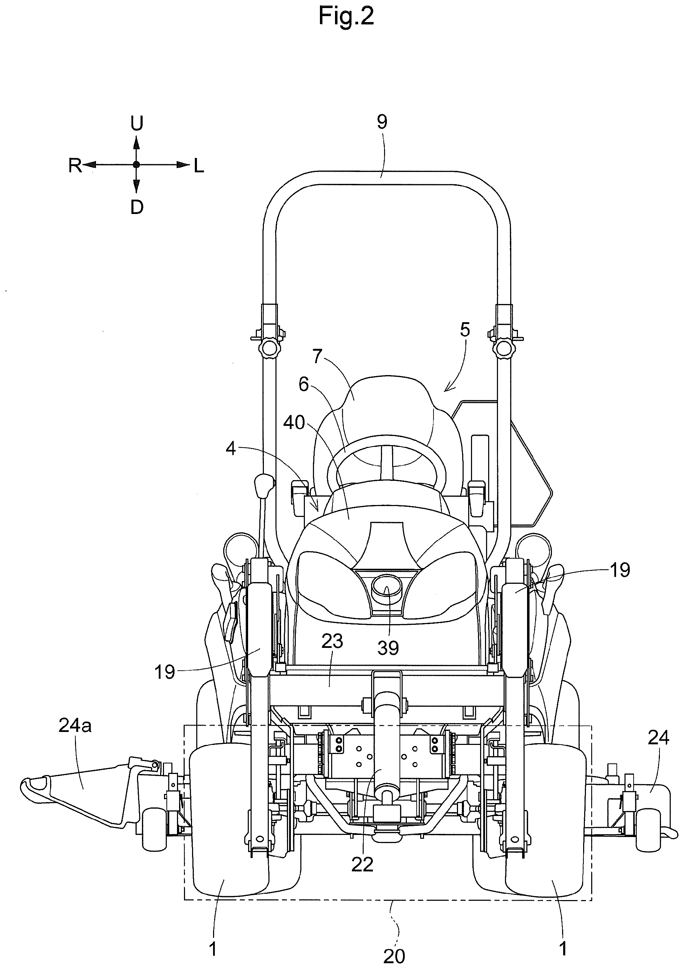

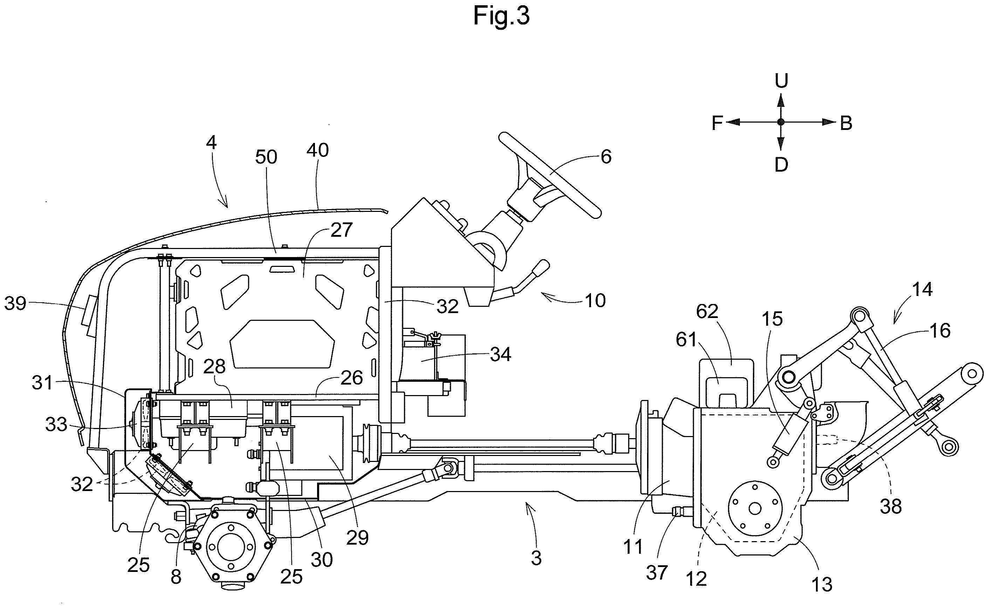

The description below deals with an embodiment of the present invention with reference to drawings. Unless otherwise specified, the description below uses terms such as "upward" to refer to the side indicated with arrow U in Figs. 1 to 3, terms such as "downward" to refer to the side indicated with arrow D in Figs. 1 to 3, terms such as "forward" to refer to the side indicated with arrow F in Figs. 1 and 3, terms such as "backward" to refer to the side indicated with arrow B in Figs. 1 and 3, terms such as "left" to refer to the side indicated with arrow L in Fig. 2, and terms such as "right" to refer to the side indicated with arrow R in Fig. 2.

The description below deals with a work machine as the present embodiment with reference to Figs. 1 to 3. The work machine includes a pair of left and right front wheels 1, a pair of left and right rear wheel 2, and a body 3 provided with the front and rear wheels 1 and 2. The work machine includes a hood 4 at a front portion of the body 3 and a driver section 5 at a back portion of the body 3. The driver section 5 includes a steering wheel 6 for use to change the direction of the front wheels 1, a driver's seat 7, and a roll-over protective structure (ROPS) frame 9. The driver section 5 includes near the steering wheel 6 two or more manual operation members 10 each for use to operate an implement provided for the work machine.

As illustrated in Figs. 1 and 3, the body 3 is in the form of a frame structure. As illustrated in Fig. 3, the body 3 has (i) a back portion provided with a transmission 12 including a continuously variable transmission device 11 and (ii) a front portion provided with a front axle case 8 holding the front wheels 1. The body 3 is provided with a transmission case 13 containing the transmission 12 and holding the rear wheels 2.

As illustrated in Fig. 3, the body 3 is provided with a lifting/lowering link mechanism 14 coupled to a back portion of the transmission case 13 in such a manner as to be swingable upward and downward. The lifting/lowering link mechanism 14 is compatible with any of various implements (not illustrated in the drawings). The body 3 is provided with a lifting/lowering cylinder 15 configured to swing the lifting/lowering link mechanism 14 upward and downward to lift and lower the implement. The transmission case 13 has an upper portion provided with a hydraulic pump 61 and a hydraulic pump motor 62 as an electric motor 29 configured to drive the hydraulic pump 61. The lifting/lowering cylinder 15 lifts and lowers the implement as driven by operating oil from the hydraulic pump 61 as a driving source.

As illustrated in Figs. 1 and 2, the body 3 has a front portion provided with a front loader 17 as an implement. The front loader 17 includes a base 18, booms 19, a bucket 20, hydraulic boom cylinders 21, and a hydraulic bucket cylinder 22. The boom cylinders 21 are configured to lift and lower the respective booms 19. The bucket cylinder 22 is configured to cause the bucket 20 to scoop and dump a target. The boom cylinders 21 and the bucket cylinder 22 each receive operating oil from the hydraulic pump 61. The body 3 is provided with lift arms 16 and lift cylinders (not illustrated in the drawings) configured to swing the respective lift arms 16 with use of operating oil from the hydraulic pump 61.

The hydraulic actuators such as the lifting/lowering cylinder 15, the boom cylinders 21, and the bucket cylinder 22 are operable in response to operation of the manual operation members 10.

As illustrated in Figs. 1 and 2, the body 3 is provided with a mower deck 24 disposed between the front wheels 1 and the rear wheels 2 and attached to the body 3 in such a manner as to be capable of being lifted and lowered.

The mower deck 24 contains three rotary blades (not illustrated in the drawings) arranged laterally and each rotatable about a vertical axis to cut grass. The body 3 includes a discharge section 25 disposed to the right of the mower deck 24 and configured to discharge the cut grass to the right.

As illustrated in Fig. 3, the body 3 has a front portion provided with a travel battery 27, an inverter 28, an electric motor 29, at least one cooling fan 32 (which is an example of the "fan"), a fan motor 33, and an electrical component battery 34. The travel battery 27 is inside the hood 4. The inverter 28 and the electric motor 29 are below the travel battery 27. The body 3 is provided with a lower cover 30 disposed below the inverter 28 and the electric motor 29 and covering the inverter 28 and the electric motor 29.

As illustrated in Fig. 3, the electric motor 29 transmits motive power through a power transmission shaft to the continuously variable transmission device 11. The continuously variable transmission device 11 is a hydraulic transmission device configured to shift gears continuously on the forward-travel and backward-travel sides.

The continuously variable transmission device 11 varies the motive power and transmits the varied motive power through an auxiliary transmission device (not illustrated in the drawings) and a rear-wheel differential device (not shown in the drawings) in the transmission 12 to the rear wheels 2. The continuously variable transmission device 11 transmits the varied motive power also through a power transmission shaft branching from a position immediately before the rear-wheel differential device to a front-wheel differential device (not illustrated in the drawings) in the front axle case 8 and then to the front wheels 1.

The transmission 12 has a front lower portion provided with a front power take-off (PTO) shaft 37 extending forward and a back portion provided with a back PTO shaft 38 extending backward. The front and back PTO shafts 37 and 38 each receive motive power that the continuously variable transmission device 11 did not vary among other portions of the motive power transmitted through power transmission shafts.

The front PTO shaft 37 transmits motive power through a power transmission shaft (not illustrated in the drawings) to the mower deck 24. The back PTO shaft 38 transmits motive power through a power transmission shaft (not illustrated in the drawings) to the implement attached to the lifting/lowering link mechanism 14.

The cooling fan 32 and the fan motor 33 are elements of a cooling system (which is an example of the "fan control system") for a work machine. The cooling fan 32 and the fan motor 33 are integral with each other and are attached to the lower cover 30. The lower cover 30 has an area facing the cooling fan 32 which area is provided with a dust barrier 31 including a dust mesh. The cooling fan 32 sucks outside air through the dust barrier 31 as cooling air to be introduced into the lower cover 30 to cool the inverter 28 and the electric motor 29 as heat generating components. The dust barrier 31 is, for example, a filter. The travel battery 27 is also a heat generating component. If the work machine includes an engine, the engine and auxiliary machines for the engine such as a radiator are also heat generating components. The fan motor 33 for the present embodiment is an example of the "fan actuator". The cooling air for the present embodiment is an example of the "cooling medium". Other examples of the cooling medium include a cooling liquid and a heat pipe.

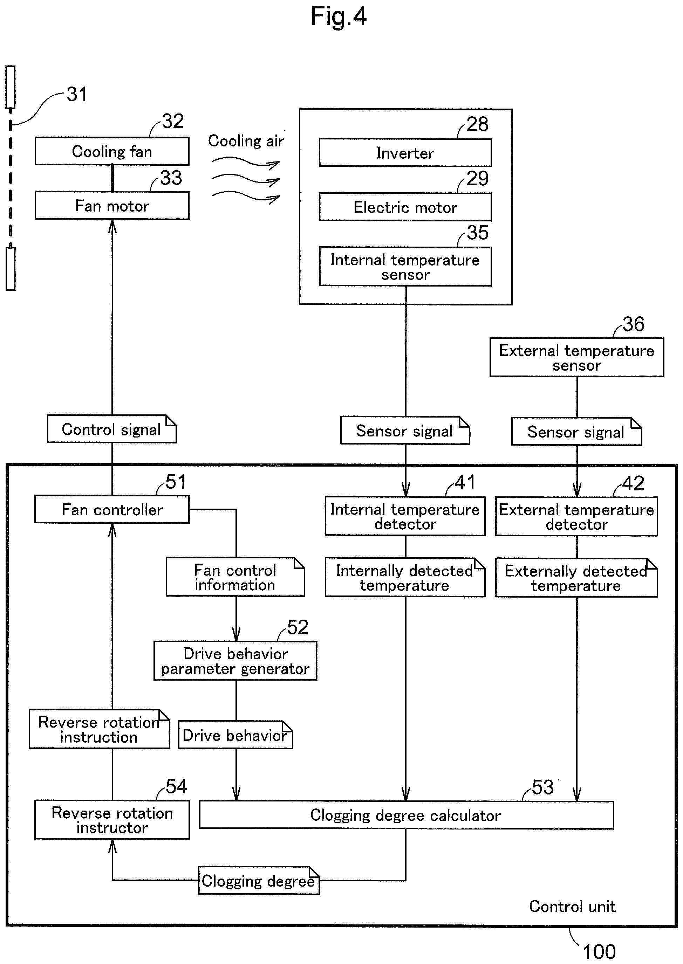

Fig. 4 is a functional block diagram illustrating the control system of a cooling system. The cooling system uses cooling air as a cooling medium to cool heat generating components such as the inverter 28 and the electric motor 29.

The present embodiment includes at least one internal temperature sensor 35 and at least one external temperature sensor 36 to detect temperature. The internal temperature sensor 35 is configured to detect the temperature of an internal space of the body 3 such as a space covered by the hood 4, a space covered by the lower cover 30, and a space covered by the transmission case 13. The internal temperature sensor 35 is also configured to directly or indirectly detect the temperature of cooling air as a cooling medium or that of a heat generating component. The external temperature sensor 36 is configured to detect the external temperature (that is, ambient or environmental temperature). Specific examples of the internal temperature sensor 35 include a water temperature sensor on a flow path for a radiator, an oil temperature sensor on an oil circuit, a temperature sensor in the electric motor 29, a temperature sensor in a battery, and a temperature sensor in a space through which cooling air flows from the cooling fan 32.

The external temperature sensor 36 is configured to detect an external temperature (that is, ambient or environmental temperature). The external temperature sensor 36 may be not only a temperature sensor disposed on an outer portion of the body 3 and configured to detect an external temperature (that is, ambient or environmental temperature), but also, for example, a temperature information receiver configured to receive information on the air temperature through a weather information service of a meteorological agency or the like. Specific examples of the temperature sensor on an outer portion of the body 3 include a temperature sensor on the driver section 5 and a temperature sensor on an outer portion of the hood 4.

The control system of the cooling system includes a computer-based control unit 100 as a core element. The control unit 100 includes as control function sections an internal temperature detector 41, an external temperature detector 42, a fan controller 51, a drive behavior parameter generator 52, a clogging degree calculator 53, and a reverse rotation instructor 54.

The internal temperature detector 41 is configured to detect (or calculate), for example, the temperature of a heat generating component (that is, either or both of the inverter 28 and the electric motor 29) on the basis of a sensor signal from the internal temperature sensor 35 as an internally detected temperature for use by other control function sections. The external temperature detector 42 is configured to detect (or calculate) the outside air temperature, for example, the ambient temperature around the work machine, on the basis of a sensor signal from the external temperature sensor 36 as an externally detected temperature for use by other control function sections.

The fan controller 51 is configured to transmit a drive signal to the fan motor 33 ("fan actuator") to rotate the cooling fan 32 in the normal and reverse directions. The drive behavior parameter generator 52 is configured to receive fan control information from the fan controller 51, obtain either or both of the rotation speed and drive time of the cooling fan 32 on the basis of the fan control information, and perform necessary operations on said either or both into a fan behavior parameter indicative of the drive behavior of the cooling fan 32.

The clogging degree calculator 53 is configured to generate a temperature parameter on the basis of the internally detected temperature and the externally detected temperature. The temperature parameter, for example, results from normalizing the internally detected temperature with the externally detected temperature. The clogging degree calculator 53 may alternatively be configured to generate a temperature parameter with use of the internally detected temperature alone. The clogging degree calculator 53 is also configured to calculate the clogging degree of the dust barrier 31 on the basis of the temperature parameter and the fan behavior parameter, which the drive behavior parameter generator 52 has generated, with use of an operation expression or lookup table prepared in advance to determine the clogging degree from a temperature parameter and a fan behavior parameter. The control unit 100 may store two or more such operation expressions or lookup tables to select from in accordance with the work status.

The reverse rotation instructor 54 is configured to, if the clogging degree of the dust barrier 31 (which the clogging degree calculator 53 has calculated) exceeds a threshold, transmit a reverse rotation instruction to the fan controller 51 to rotate the cooling fan 32 in the reverse direction for blowing grain culms, grass, and plant roots off the dust barrier 31. The fan controller 51, in response to receiving a reverse rotation instruction, generates a control signal for reverse rotation and transmits the control signal to the fan motor 33 to rotate the cooling fan 32 in the reverse direction.

The cooling fan 32 may rotate in the reverse direction over a predetermined time period or a time period variable according to the clogging degree. The cooling fan 32 may, for example, rotate in the reverse direction over a predetermined time period if the clogging degree is low and over a time period longer than the predetermined time period if the clogging degree is high. The cooling fan 32 may alternatively rotate in the reverse direction at a speed higher in a continuous or stepwise manner with a higher clogging degree.

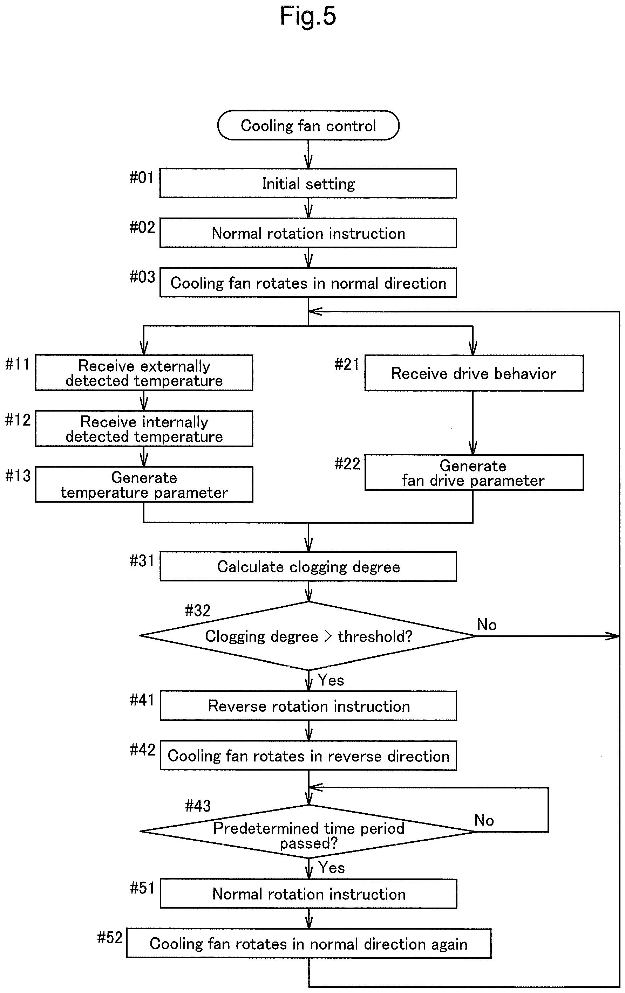

The description below deals with an example of how the cooling system described above controls a cooling fan, with reference to the flowchart in Fig. 5.

The cooling system starts the cooling fan control with an initial setting step (#01) to set, for example, a threshold for the clogging degree as a condition for the reverse rotation of the cooling fan 32 and a reverse rotation time period for the cooling fan 32. Next, a control manager in the control unit 100 transmits a normal rotation instruction to the fan controller 51, which in response transmits a control signal for normal rotation of the cooling fan 32 to the fan motor 33 (#02). This causes the cooling fan 32 to start rotating in the normal direction (#03).

Next, the cooling system generates parameters of temperature and drive behavior that are necessary to calculate the clogging degree of the dust barrier 31. To generate a temperature parameter, the clogging degree calculator 53 receives information on the internally detected temperature from the internal temperature detector 41 (#11) and information on the externally detected temperature from the external temperature detector 42 (#12). The clogging degree calculator 53 generates from the internally detected temperature and the externally detected temperature a temperature parameter for use to determine whether to rotate the cooling fan 32 in the reverse direction (#13). The clogging degree calculator 53 may alternatively omit receiving information on the externally detected temperature to generate a temperature parameter from the internally detected temperature alone. The drive behavior parameter generator 52 obtains the drive behavior generated (#21), and generates from the drive behavior a fan behavior parameter indicative of the drive behavior of the cooling fan 32 (#22).

The clogging degree calculator 53 calculates the clogging degree of the dust barrier 31 with use of the temperature parameter and the fan behavior parameter (#31). The cooling system compares the clogging degree with the initially set threshold (#32). If the clogging degree is not higher than the threshold (No in #32), the control process returns to steps #11 and #21 to repeat the parameter generation.

If the clogging degree is higher than the threshold (Yes in #32), the reverse rotation instructor 54 transmits a reverse rotation instruction to the fan controller 51 (#41). The fan controller 51, in response, transmits a control signal for reverse rotation of the cooling fan 32 to the fan motor 33 to rotate the cooling fan 32 in the reverse direction (#42).

The cooling system then checks how long the cooling fan 32 has been rotating in the reverse direction (#43). If the reverse rotation time period is shorter than a predetermined time period (No in #43), the cooling system lets the fan motor 33 continue to rotate in the reverse direction. If the reverse rotation time period is not shorter than the predetermined time period (Yes in #43), the control unit 100 transmits a normal rotation instruction to the fan controller 51 (#51) to rotate the fan motor 33 in the normal direction and thereby rotate the cooling fan 32 in the normal direction again (#52). The control process then returns to steps #11 and #21 to repeat the parameter generation.

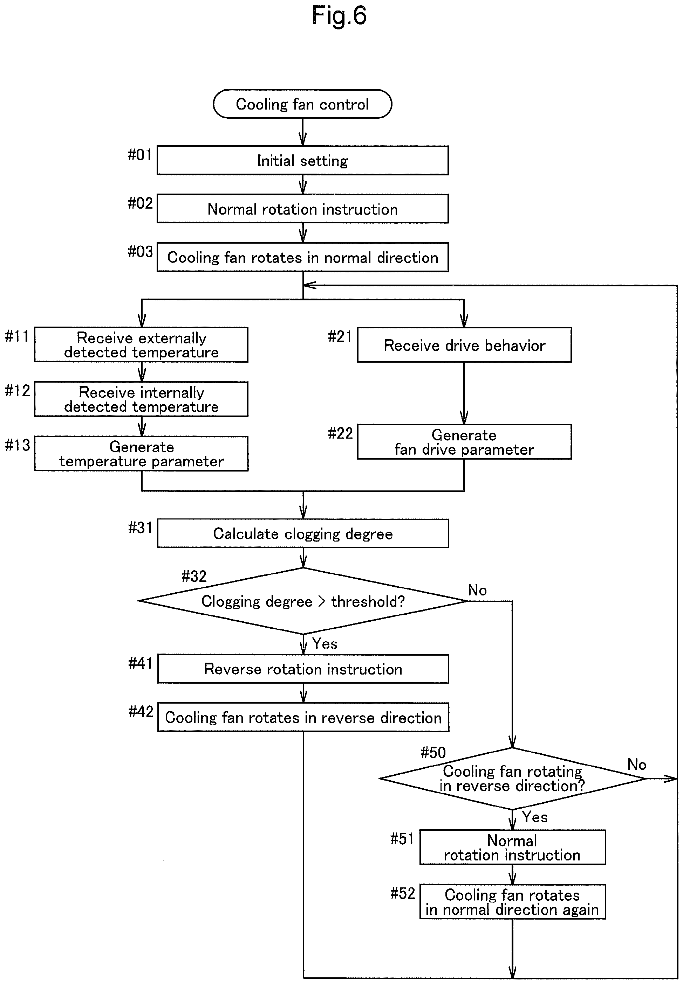

Fig. 6 is a flowchart of cooling fan control in a mode different from that illustrated in Fig. 5 in that the cooling fan 32 returns to normal rotation from reverse rotation not when a predetermined time period has passed but if the clogging degree of the dust barrier 31 as calculated is determined as having been reduced to a predetermined level. The flowchart of Fig. 6 is identical to that of Fig. 5 on steps #01 to #32. The flowchart of Fig. 6 is also similar to that of Fig. 5 on step #32 for checking the clogging degree of the dust barrier 31 in that if the clogging degree is higher than the threshold (Yes in #32), the reverse rotation instructor 54 transmits a reverse rotation instruction to the fan controller 51 (#41). The fan controller 51, in response, transmits a control signal for reverse rotation of the cooling fan 32 to the fan motor 33 to rotate the cooling fan 32 in the reverse direction (#42). The present embodiment is configured to determine that the clogging degree has been reduced to a predetermined level in response to the clogging degree becoming not higher than the threshold, the clogging degree being calculated by the clogging degree calculator 53 on the basis of the temperature parameter and the fan behavior parameter (for example, the rotation behavior detected by a sensor for detecting the number of revolutions) described above. The present embodiment may alternatively be configured to determine that the clogging degree has been reduced to a predetermined level in response to the clogging degree becoming lower than the threshold by a predetermined value.

The flowchart of Fig. 6 is, however, different in that if the clogging degree is not higher than the threshold (No in #32), the cooling system checks whether the cooling fan 32 is rotating in the reverse direction or in the normal direction (#50). If the cooling fan 32 is rotating in the normal direction (No in #50), the control process returns to steps #11 and #21 to repeat the parameter generation. If the cooling fan 32 is rotating in the reverse direction (Yes in #50), the control unit 100 transmits a normal rotation instruction to the fan controller 51 (#51) to rotate the fan motor 33 in the normal direction and thereby rotate the cooling fan 32 in the normal direction again (#52). The control process then returns to steps #11 and #21 to repeat the parameter generation.

The embodiment described above is of the fan control system of the present invention as a cooling system for a work machine. The present invention is, however, also applicable to a cooling system for a vehicle other than a work machine or for a stationary machine. The fan control system of the present invention is also applicable to a heating system including a fan and an air circulating or air cleaning system including a fan.

Alternative Embodiments

(1) The fan actuator for the embodiment described above is a fan motor 33 drivable by the fan controller 51 such that the cooling fan 32 rotates under electric control. The fan actuator may alternatively be a mechanism configured to mechanically switch the rotation direction such as a belt-based power transmission mechanism or a gear-based power transmission mechanism.

(2) The work machine for the embodiment described above is an electric vehicle including an electric motor 29 as a travel driving source. The work machine may alternatively be a conventional vehicle including an internal combustion engine as a travel driving source or a hybrid vehicle including both an electric motor 29 and an internal combustion engine as travel driving sources. If the engine is of an air-cooling type, the cooling fan 32 directly cools the engine with use of cooling air (which is an example of the "cooling medium"). If the engine is of a liquid-cooling type, the cooling fan 32 cools (i) a radiator configured to circulate cooling liquid (which is an example of the "cooling medium") through the engine and (ii) the cooling liquid.

(3) If the cooling fan 32 is incapable of bringing cooling air into direct contact with a heat generating component, the cooling fan 32 may alternatively be configured to bring cooling air into contact with a heat pipe (which is an example of the "cooling medium") connected to the heat generating component.

(4) The clogging degree calculator 53 for the embodiment described above is configured to calculate the clogging degree of the dust barrier 31 on the basis of (i) a temperature parameter generated from the internally detected temperature and the externally detected temperature that the clogging degree calculator 53 has received and (ii) a fan behavior parameter the drive behavior parameter generator 52 has generated from drive behavior. The clogging degree calculator 53, in other words, calculates the clogging degree K with use of the following relational expression (an example of which is a lookup table).

$$K = G(\alpha 1, \alpha 2, \alpha 3, ..., \beta 1, \beta 2, \beta 3, ...)$$

Examples of the fan behavior parameter ($\alpha 1$, $\alpha 2$, $\alpha 3$,...) include a fan drive time, a fan rotation speed, the difference between an intended number of fan revolutions and the actual number of fan revolutions, and the range of change in the number of fan revolutions. Examples of the temperature parameter ($\beta 1$, $\beta 2$, $\beta 3$,...) include the temperature of a cooling medium or heat generating component that the internal temperature detector 41 has detected, the outside air temperature that the external temperature detector 42 has detected, and the rate of increase in the temperature (that is, a temperature change over a predetermined time period) of a heat generating component (that is, a cooling target component) such as the electric motor 29 and the inverter 28. The clogging degree calculator 53 may alternatively calculate the clogging degree K on the basis of the fan behavior parameter alone.

(5) The clogging degree calculator 53 may alternatively be configured to estimate the clogging degree K through recognition of an image of the dust barrier 31. The clogging degree calculator 53 may calculate the clogging degree on the basis of, for example, the result of recognizing grass on a filter portion of the dust barrier 31 in an image captured of the filter portion. The present invention may use, as a camera for that use, an existing camera for detecting an obstacle or a dedicated camera. The present invention may combine the result of calculating the clogging degree through image recognition as above with the result of calculating the clogging degree on the basis of the fan behavior parameter and the temperature parameter.

The arrangements disclosed for the above embodiments (including the alternative embodiments; hereinafter the same applies) may each be combined with an arrangement disclosed for another embodiment, as long as such a combination does not cause a contradiction. Further, the embodiments disclosed in the present specification are mere examples. The present invention is not limited to those embodiments, and may be altered as appropriate, as long as such an alteration does not result in a failure to attain an object of the present invention.

Industrial Applicability

The present invention is applicable to any of various fan control systems for controlling a fan operable in collaboration with a dust barrier and to any apparatus and equipment including such a fan control system.

Reference Signs List

28 Inverter (heat generating component)
29 Electric motor (heat generating component)
30 Lower cover
31 Dust barrier
32 Cooling fan (fan)
33 Fan motor (fan actuator)
34 Electrical component battery
35 Internal temperature sensor
36 External temperature sensor
41 Internal temperature detector
42 External temperature detector
51 Fan controller
52 Drive behavior parameter generator
53 Clogging degree calculator
54 Reverse rotation instructor
100 Control unit

**Claims**

1. A fan control system, comprising:

   a fan (32);
   a dust barrier (31) near the fan (32);
   a fan actuator (33) configured to rotate the fan (32) in a normal direction and a reverse direction;
   a fan controller (51) configured to control a manner in which the fan actuator (33) is driven;
   a clogging degree calculator (53) configured to calculate a clogging degree of the dust barrier (31) based on drive behavior of the fan (32); and
   a reverse rotation instructor (54) configured to instruct the fan controller (51) based on the clogging degree to rotate the fan (32) in the reverse direction.

2. The fan control system according to claim 1, wherein the fan actuator (33) is a fan motor (33) configured to receive from the fan controller (51) a drive signal for controlling the manner in which the fan motor (33) is driven.

3. The fan control system according to claim 1 or 2, wherein the drive behavior is based on either or both of a rotation speed of the fan (32) and a drive time of the fan (32).

4. The fan control system according to any one of claims 1 to 3, wherein the fan (32) is configured to rotate in the reverse direction over a predetermined time period.

5. The fan control system according to any one of claims 1 to 4, wherein the fan (32) is configured to rotate in the reverse direction over a time period variable according to the clogging degree.

6. The fan control system according to any one of claims 1 to 5, wherein

the fan (32) is a cooling fan (32) configured to cool at least one heat generating component (28, 29) with use of at least one cooling medium, the fan control system further comprises an internal temperature detector (41) configured to detect a temperature of the at least one cooling medium or a temperature of the at least one heat generating component (28, 29), and the clogging degree calculator (53) is configured to calculate the clogging degree based on the temperature detected by the internal temperature detector (41) and the drive behavior.

7. The fan control system according to claim 6, further comprising:

an external temperature detector (42) configured to detect a temperature of outside air, wherein the clogging degree calculator (53) is configured to calculate the clogging degree based on the temperature of the outside air, the temperature detected by the internal temperature detector (41), and the drive behavior.

8. The fan control system according to claim 6 or 7, wherein
the at least one cooling medium is at least one of cooling air, cooling liquid, or a heat pipe.

9. The fan control system according to any one of claims 6 to 8, wherein
the at least one heat generating component (28, 29) is at least one of a radiator, an engine, an electric motor (29), an inverter (28), or a battery.

10. A work machine, comprising the fan control system according to any one of claims 1 to 9.

Fig.1

# Fig.2

Fig.3

# Fig.4

# Fig.5

```
                    ( Cooling fan control )
                             │
                             ▼
      #01 │          Initial setting          │
                             │
                             ▼
      #02 │      Normal rotation instruction   │
                             │
                             ▼
      #03 │ Cooling fan rotates in normal direction │
                             │
            ┌────────────────┼──────────────────────┐
            │                │                       │
            ▼                │                       ▼
  #11 │ Receive externally        │      #21 │ Receive drive behavior │
      │ detected temperature │                       │
            │                                        │
            ▼                                        │
  #12 │ Receive internally  │                        │
      │ detected temperature │                       ▼
            │                        #22 │      Generate        │
            ▼                            │  fan drive parameter  │
  #13 │      Generate       │                        │
      │ temperature parameter │                      │
            └────────────────┬──────────────────────┘
                             │
                             ▼
      #31 │     Calculate clogging degree     │
                             │
                             ▼
      #32         ◇ Clogging degree > threshold? ◇ ──No──→
                             │
                           Yes│
                             ▼
      #41 │     Reverse rotation instruction   │
                             │
                             ▼
      #42 │ Cooling fan rotates in reverse direction │
                             │
                             ▼
      #43    ◇ Predetermined time period passed? ◇ ──No──
                             │
                           Yes│
                             ▼
      #51 │      Normal rotation instruction   │
                             │
                             ▼
      #52 │ Cooling fan rotates in normal direction again │
```

# Fig.6

```
                    ┌──────────────────────┐
                    │  Cooling fan control │
                    └──────────┬───────────┘
                               │
              #01   ┌──────────────────────────┐
                    │      Initial setting      │
                    └───────────┬──────────────┘
                                │
              #02   ┌──────────────────────────┐
                    │  Normal rotation instruction │
                    └───────────┬──────────────┘
                                │
              #03   ┌──────────────────────────────────┐
                    │ Cooling fan rotates in normal direction │
                    └───────────┬──────────────────────┘
```

#11 Receive externally detected temperature

#12 Receive internally detected temperature

#13 Generate temperature parameter

#21 Receive drive behavior

#22 Generate fan drive parameter

#31 Calculate clogging degree

#32 Clogging degree > threshold?    No

Yes

#41 Reverse rotation instruction

#42 Cooling fan rotates in reverse direction

#50 Cooling fan rotating in reverse direction?    No

Yes

#51 Normal rotation instruction

#52 Cooling fan rotates in normal direction again

Europäisches
Patentamt

European
Patent Office

Office européen
des brevets

# EUROPEAN SEARCH REPORT

**Application Number**

EP 24 19 6636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 202 18 951 U1 (LINDE AG [DE]) 20 February 2003 (2003-02-20) * page 1, lines 3-5 * * page 2, lines 3-17, 23-25 * * page 3, lines 4-7 * | 1-10 | INV. F04D19/00 F04D27/00 F04D29/58 F04D29/70 |
| X | DE 10 2014 204718 A1 (BAYERISCHE MOTOREN WERKE AG [DE]) 17 September 2015 (2015-09-17) * paragraphs [0007] - [0009], [0013], [0014], [0017], [0020], [0034], [0044] - [0046] * * claims 1, 3 * * figures 1, 2 * | 1-10 | |
| X | US 2021/270016 A1 (HYODO KOJI [JP] ET AL) 2 September 2021 (2021-09-02) * paragraphs [0045] - [0047], [0073], [0074] * * figures 1, 2 * | 1-10 | |
| A | JP 2001 124382 A (DAIKIN IND LTD) 11 May 2001 (2001-05-11) * paragraphs [0019], [0022] * * figure 1 * | 1-10 | TECHNICAL FIELDS SEARCHED (IPC) F04D F24F F01P |
| A | DE 20 2004 011074 U1 (PFANNENBERG GMBH [DE]) 28 October 2004 (2004-10-28) * paragraphs [0007] - [0009], [0015] * * figures 1, 4 * | 1-10 | |

The present search report has been drawn up for all claims

| Place of search | Date of completion of the search | Examiner |
|---|---|---|
| The Hague | 20 January 2025 | De Tobel, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6636

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | Publication date | Patent family member(s) | | Publication date |
|---|---|---|---|---|
| DE 20218951 U1 | 20-02-2003 | NONE | | |
| DE 102014204718 A1 | 17-09-2015 | NONE | | |
| US 2021270016 A1 | 02-09-2021 | CN 112639263 A | | 09-04-2021 |
| | | EP 3832083 A1 | | 09-06-2021 |
| | | JP 7076396 B2 | | 27-05-2022 |
| | | JP 2020159307 A | | 01-10-2020 |
| | | US 2021270016 A1 | | 02-09-2021 |
| | | WO 2020194952 A1 | | 01-10-2020 |
| JP 2001124382 A | 11-05-2001 | NONE | | |
| DE 202004011074 U1 | 28-10-2004 | DE 202004000994 U1 | | 19-05-2004 |
| | | DE 202004011074 U1 | | 28-10-2004 |

EPO FORM P0459

For more details about this annex : see Official Journal of the European Patent Office, No. 12/82

**EP 4 517 097 A1**

**Patent documents cited in the description**

- JP 11036862 A